# DEMANDE DE BREVET EUROPEEN

(11) **EP 3 002 500 A1**
(43) Date de publication de la demande: **06.04.2016**
(21) Numéro de dépôt: 15187223.1
(22) Date de dépôt: 28.09.2015
(51) Int. Cl.: F21L 4/08, B60Q 3/00, B60Q 3/02

(54) **DISPOSITIF ELECTRIQUE AMOVIBLE DE VEHICULE AUTOMOBILE**

(30) Priorité: 01.10.2014 FR 1459392
(71) Demandeur: VALEO VISION, 93012 Bobigny (FR)
(72) Inventeur: DUBOSC, Christophe, 93250 VILLEMOMBLE (FR); TASSY, Pierre-Louis, 92600 ASNIERES SUR SEINE (FR); BRIAND, Maxime, 72560 CHANGE (FR); RASOLDIER, Nirina, 94230 CACHAN (FR)

(57) **Abrégé**

Dispositif électrique amovible de véhicule automobile, insérable dans un logement de l'habitacle du véhicule automobile, où sa batterie (4) est rechargeable, ledit dispositif électrique (1) comportant un indicateur lumineux, constituant en période diurne, un indicateur de charge de la batterie (4), et en période nocturne, un élément d'éclairage d'ambiance de l'habitacle du véhicule.

## Description

L'invention concerne un dispositif électrique amovible de véhicule automobile, et plus particulièrement un tel dispositif électrique équipé d'un indicateur de charge.

Le document US 2013/0155 659 décrit une lampe torche amovible dont la batterie est rechargée quand la lampe torche est sur son support.

Le document FR 3 001 672 décrit une lampe torche amovible constituée sous forme d'une poignée de maintien dans l'habitacle d'un véhicule automobile. Cette lampe torche est équipée d'une source lumineuse auxiliaire qui peut être commandée pour assurer un éclairage de l'habitacle.

Les lampes torches de l'état de l'art ne comportent pas d'indicateur de charge.

Un premier but de l'invention est de proposer un dispositif électrique amovible de véhicule automobile comportant un indicateur de charge.

Un autre but de l'invention est de proposer un dispositif électrique amovible de véhicule automobile comportant un témoin d'indicateur de charge non ponctuel, dans un encombrement restreint.

Un autre but de l'invention est de proposer un dispositif électrique amovible de véhicule automobile comportant un témoin d'indicateur de charge apte à distinguer plusieurs états de charge dans différentes configurations.

L'invention a pour objet un dispositif électrique amovible de véhicule automobile, insérable dans un logement de l'habitacle du véhicule automobile, où sa batterie est rechargeable, ledit un dispositif électrique comportant un indicateur lumineux, caractérisé en ce que l'indicateur lumineux constitue, en période diurne, un indicateur de charge de la batterie, et en période nocturne, un élément d'éclairage d'ambiance de l'habitacle du véhicule.

Avantageusement, le dispositif électrique comporte une unité de contrôle apte à contrôler l'émission de lumière de l'indicateur lumineux en fonction de la période diurne ou nocturne et éventuellement en fonction de l'état de charge de la batterie et/ou de la position du dispositif électrique vis-à-vis de son logement.

Par exemple, l'unité de contrôle peut être agencée pour adapter la couleur de l'indicateur lumineux en fonction de l'état de charge de la batterie lorsque l'indicateur lumineux fonctionne comme indicateur de charge et que le dispositif électrique est installé dans son logement.

Selon un autre exemple, l'unité de contrôle peut être adaptée pour contrôler l'indicateur lumineux de sorte qu'il émette en permanence de la lumière lorsque l'indicateur est installé dans son logement et fonctionne comme élément d'éclairage d'ambiance.

Eventuellement, l'unité de contrôle est agencée pour contrôler l'indicateur lumineux de sorte qu'il émette de la lumière sous forme pulsée lorsque l'indicateur est hors de son logement et que la batterie présente un état de charge en dessous d'une valeur seuil prédéterminée.

Avantageusement, le dispositif électrique comprend un sous-ensemble comprenant une source lumineuse apte à émettre de la lumière et un écran de sortie de la lumière émise par la source lumineuse, l'écran de sortie étant transparent ou translucide et constituant l'indicateur lumineux. Selon un mode de réalisation de l'invention, le dispositif électrique comprend un boîtier, un couvercle, le sous-ensemble étant agencé entre le boîtier et le couvercle de sorte à ce que l'écran de sortie soit visible latéralement.

Avantageusement, l'écran de sortie est un écran diffusant, en matériau transparent pourvu d'un grainage, ou en matériau diffusant.

De manière avantageuse, le sous-ensemble comporte un support de circuit imprimé supportant au moins un guide de lumière et l'écran de sortie. Le cas échéant, le guide de lumière est agencé pour guider la lumière émise par la source lumineuse, par réflexion interne totale, jusqu'à l'écran de sortie.

Avantageusement, le support de circuit imprimé supporte la source lumineuse, cette source lumineuse étant une LED RVB.

Avantageusement, le support de circuit imprimé supporte la source lumineuse, cette source lumineuse étant une LED à émission latérale.

De manière avantageuse, un guide de lumière est en forme de baguette et présente une échancrure apte à recevoir de la lumière émise par la source lumineuse.

Avantageusement, l'écran de sortie présente deux bras latéraux qui bordent chacun par l'extérieur un des guides de lumière.

De manière avantageuse, l'écran de sortie présente une partie frontale qui assure d'une part la liaison mécanique avec les bras latéraux, d'autre part le blocage en position axiale du sous-ensemble par rapport à un boîtier.

Avantageusement, chacun des bras latéraux de l'écran de sortie constitue l'indicateur lumineux.

De manière avantageuse, l'indicateur lumineux est une ligne lumineuse.

Avantageusement, le dispositif électrique amovible comporte une source lumineuse connectée électriquement à la batterie et apte à émettre de la lumière lorsqu'elle est alimentée par la batterie, de sorte que le dispositif électrique amovible soit une lampe torche.

D'autres caractéristiques et avantages de l'invention ressortent de la description qui suit faite avec référence aux dessins annexés dans lesquels :

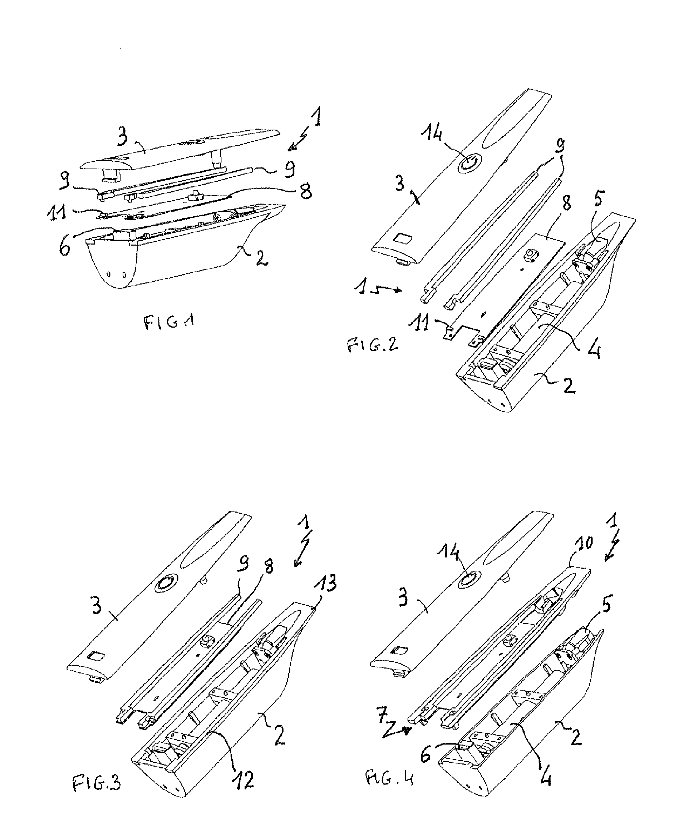

- La figure 1 est une vue éclatée d'un exemple de réalisation du dispositif électrique amovible selon l'invention, sous forme d'une lampe torche amovible ;
- La figure 2 est une vue éclatée, sous une incidence différente, de la lampe torche amovible de la figure 1 ;
- La figure 3 est une vue éclatée, analogue à la figure 2, montrant l'assemblage des guides de lumière et du support de circuit imprimé ;
- La figure 4 est une vue éclatée, analogue à la figure 3, montrant l'assemblage de l'écran de sortie avec les guides de lumière et le support de circuit imprimé ;

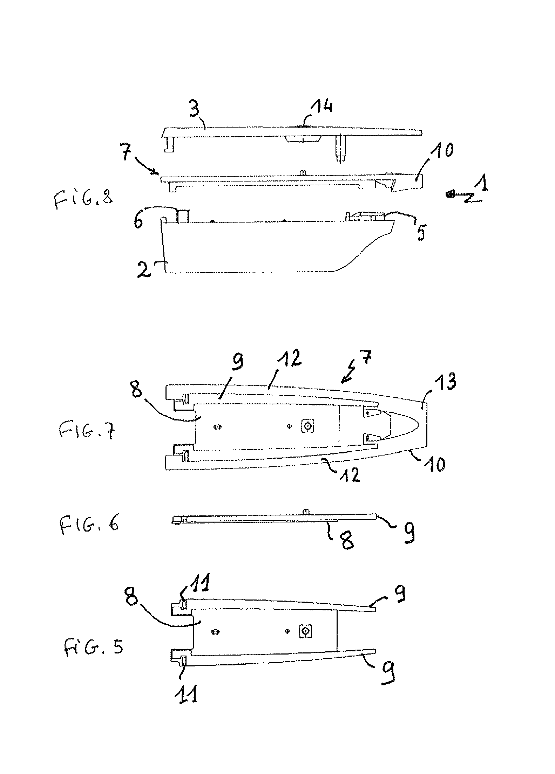

- La figure 5 est une vue de dessus de l'ensemble des guides de lumière et du support de circuit imprimé ;
- La figure 6 est une vue de face de l'ensemble de la figure 5 ;
- La figure 7 est une vue de dessus du sous-ensemble de l'écran de sortie, des guides de lumière et du support de circuit imprimé ;
- La figure 8 est une vue éclatée, de face, de la lampe torche amovible de la figure 4.

Le dispositif électrique amovible 1, désigné ci-après lampe torche amovible 1, se présente sous forme d'un boitier 2 fermé par un couvercle 3, et insérable dans un logement dans l'habitacle d'un véhicule. Dans ce logement, la lampe torche amovible 1 est connectée à un circuit de charge de la batterie 4 logée dans le boîtier 2. Le boitier 2 comporte les composants usuels d'une lampe torche et notamment une lampe 5 d'éclairage frontal de type LED. Dans l'exemple de réalisation représenté, le boîtier 2 comporte un connecteur 6 pour prise USB.

En haut du boîtier 2, et sous le couvercle 3, est disposé un sous-ensemble 7 sensiblement plat, à fonction d'indicateur lumineux. Ce sous-ensemble 7 est constitué d'un support de circuit imprimé 8, de guides de lumière 9 et d'un écran de sortie 10. Le support de circuit imprimé 8 porte, à sa partie arrière, dans l'exemple de réalisation représenté, deux LED RVB à émission latérale, c'est-à-dire deux LED à éclairement coloré à base de rouge (R), vert (V) et bleu (B), à émission parallèle au plan du support de circuit imprimé. Ces deux LED RVB portent la référence 11 et sont en saillie sur le support de circuit imprimé 8.

Les deux guides de lumière 9 sont en matériau transparent avec des éléments de découplage, préférentiellement prismatiques, ou en matériau diffusant.

Ils sont en forme de baguette avec une échancrure à l'arrière apte à recevoir une LED RVB 11.

Ainsi, chaque guide de lumière 9 est en appui arrière sur une LED RVB 11, et s'étend le long du support de circuit imprimé 8, et au-delà.

L'écran de sortie 10 présente deux bras latéraux 12 et une partie frontale 13. Les bras latéraux 12 bordent chacun par l'extérieur un guide de lumière 9.

La partie frontale 13 assure d'une part la liaison mécanique entre les bras latéraux 12, d'autre part le blocage en position axiale du sous-ensemble 7 par rapport au boîtier 2, grâce à un appui frontal sur le boîtier 2.

L'écran de sortie 10 est logé entre le boîtier 2 et le couvercle 3, et il est visible latéralement lorsque le couvercle 3 est fixé sur le boîtier 2.

Cet écran de sortie 10 est en matériau transparent à grainage en surface, ou en matériau diffusant de sorte que l'écran de sortie est un écran diffusant. Il est en contact latéral avec les guides de lumière 9 qui eux-mêmes sont au contact des LED RVB 11. Ainsi, en cas d'éclairement des LED RVB 11, l'écran de sortie 10 rend visible de l'extérieur, par chacun de ses bras latéraux 12, une ligne lumineuse de chaque côté du boîtier 2.

Le fonctionnement de la lampe torche amovible selon l'invention est le suivant, la lampe torche étant supposée initialement dans son logement, dans l'habitacle du véhicule, et la batterie 4 complètement chargée. Dans cette hypothèse, en période nocturne, la lampe torche participe à l'éclairage d'ambiance du véhicule, et l'écran de sortie 10 constitue une ligne lumineuse discrète.

En période diurne, la ligne lumineuse constitue un indicateur de charge de la batterie. La ligne lumineuse est verte lorsque la batterie 4 est complètement chargée, et elle est orange lorsque la batterie 4 est en charge.

Lorsque la lampe torche amovible est sortie de son logement de l'habitacle, une pression sur le bouton de commande 14 du couvercle 3 permet de la faire fonctionner en torche. Lorsque la batterie est faible, la ligne lumineuse de l'écran de sortie 10 devient rouge et clignotante, attirant l'attention sur la nécessité de remettre la lampe torche en charge dans son logement.

Selon une caractéristique de l'invention, le passage de la période diurne à la période nocturne, qui est automatiquement assuré par le véhicule, entraîne l'adaptation automatique de l'état de la ligne lumineuse de l'écran de sortie. Ainsi, la lampe torche amovible de véhicule automobile comporte, avec la ligne lumineuse de l'écran de sortie, un indicateur lumineux constituant, en période diurne, un indicateur de charge de la batterie de la lampe torche, et en période nocturne, un élément d'éclairage d'ambiance de l'habitacle du véhicule.

De préférence, le dispositif électrique comporte une unité de contrôle, logée dans le boîtier, et apte à contrôler l'émission de lumière de l'indicateur lumineux en fonction de la période, diurne ou nocturne, et éventuellement en fonction de l'état de charge de la batterie et/ou de la position du dispositif électrique vis-à-vis de son logement.

Dans un exemple de réalisation, lorsque le dispositif électrique est dans son logement en période nocturne, l'unité de contrôle commande l'émission permanente de lumière par l'indicateur lumineux pour assurer un éclairage d'ambiance.

En période diurne, lorsque le dispositif électrique est dans son logement, l'unité de contrôle commande l'émission permanente de lumière par l'indicateur lumineux en fonction de l'état de charge de la batterie : couleur verte pour la batterie chargée, et orange pour la batterie en charge.

Le dispositif électrique étant hors de son logement en période nocturne, l'unité de contrôle commande l'émission de lumière, de préférence rouge, sous forme pulsée, par l'indicateur lumineux, lorsque l'état de charge de la batterie descend en dessous d'une valeur seuil prédéterminée.

## Revendications

1. Dispositif électrique amovible de véhicule automobile, insérable dans un logement de l'habitacle du véhicule automobile, où sa batterie (4) est rechargeable, ledit dispositif électrique (1) comportant un indicateur lumineux, **caractérisé en ce que** l'indicateur lumineux constitue, en période diurne, un indicateur de charge de la batterie (4), et en période nocturne, un élément d'éclairage d'ambiance de l'habitacle du véhicule
et **en ce qu'**il comporte une unité de contrôle apte à contrôler l'émission de lumière de l'indicateur lumineux en fonction de la période diurne ou nocturne et éventuellement en fonction de l'état de charge de la batterie et/ou de la position du dispositif électrique vis-à-vis de son logement.

2. Dispositif électrique selon la revendication 1, **caractérisé en ce qu'**il comprend un sous-ensemble (7) comprenant une source lumineuse apte à émettre de la lumière et un écran de sortie de la lumière émise par la source lumineuse, l'écran de sortie (10) étant transparent ou translucide et constituant l'indicateur lumineux.

3. Dispositif électrique selon la revendication 2, **caractérisé en ce que** l'écran de sortie (10) est un écran diffusant.

4. Dispositif électrique selon la revendication 3, **caractérisé en ce que** l'écran de sortie est en matériau transparent pourvu d'un grainage.

5. Dispositif électrique selon la revendication 3, **caractérisé en ce que** l'écran de sortie est en matériau diffusant.

6. Dispositif électrique selon l'une des revendications 2 à 5, **caractérisé en ce que** le sous-ensemble (7) comporte un support de circuit imprimé (8), le support de circuit imprime supportant au moins un guide de lumière (9) et l'écran de sortie (10).

7. Dispositif électrique selon la revendication 6, **caractérisé en ce que** le support de circuit imprimé (8) supporte la source lumineuse, cette source lumineuse étant une LED RVB (11).

8. Dispositif électrique selon l'une des revendications 6 ou 7, **caractérisé en ce que** le support de circuit imprimé (8) supporte la source lumineuse, cette source lumineuse étant une LED à émission latérale.

9. Dispositif électrique selon l'une des revendications 6 à 8, **caractérisé en ce qu'**un guide de lumière (9) est en forme de baguette et présente une échancrure apte à recevoir de la lumière émise par la source lumineuse (11).

10. Dispositif électrique selon l'une des revendications 2 à 9, **caractérisé en ce que** le sous-ensemble comporte au moins deux sources de lumière et deux guides de lumière et **en ce que** l'écran de sortie (10) présente deux bras latéraux (12) qui bordent chacun par l'extérieur un des guides de lumière (9).

11. Dispositif électrique selon la revendication 10, **caractérisé en ce que** l'écran de sortie (10) présente une partie frontale (13) qui assure d'une part la liaison mécanique avec les bras latéraux (12), d'autre part le blocage en position axiale du sous-ensemble (7) par rapport à un boîtier (2).

12. Dispositif électrique selon l'une des revendications 10 ou 11, **caractérisé en ce que** chacun des bras latéraux (12) de l'écran de sortie (10) constitue l'indicateur lumineux.

13. Dispositif électrique selon l'une des revendications 1 à 12, **caractérisé en ce que** l'indicateur lumineux est une ligne lumineuse.

14. Dispositif électrique amovible selon l'une des revendications précédentes, le dispositif électrique amovible comportant une source lumineuse connectée électriquement à la batterie et apte à émettre de la lumière lorsqu'elle est alimentée par la batterie de sorte que le dispositif électrique amovible soit une lampe torche.
